# EUROPÄISCHE PATENTSCHRIFT

(11) **EP 0 843 938 B1**
(45) Veröffentlichungstag und Bekanntmachung des Hinweises auf die Patenterteilung: **16.05.2001**
(21) Anmeldenummer: 96928319.1
(22) Anmeldetag: 23.07.1996
(51) Int. Cl.: H04N 7/173

(54) **VERFAHREN ZUR AUSWAHL UND ZUM ABRUF VON MULTIMEDIA-DIENSTEN**
PROCESS FOR SELECTING AND REQUESTING MULTIMEDIA SERVICES
PROCEDE DE SELECTION ET DE DEMANDE DE SERVICES MULTIMEDIA

(30) Priorität: 09.08.1995 DE 19529339
(43) Veröffentlichungstag der Anmeldung: 27.05.1998
(73) Patentinhaber: SIEMENS AKTIENGESELLSCHAFT, 80333 München (DE)
(72) Erfinder: THEIMER, Thomas, D-81379 München (DE); HUSSMANN, Heinrich, D-82327 Tutzing (DE)
(86) Internationale Anmeldenummer: DE9601348
(87) Internationale Veröffentlichungsnummer: WO9706639

(56) Entgegenhaltungen:
- WO-A-94/24803
- WO-A-94/27296
- WO-A-95/01058
- ISS '95. WORLD TELECOMMUNICATIONS CONGRESS. (INTERNATIONAL SWITCHIN SYMPOSIUM), ADVANCED SWITCHING TECHNOLOGIES FOR UNIVERSAL TELECOMMUNICATIONS AT THE BEGINNING OF THE 21ST. CENTURY BERLIN, APR. 23 - 28, 1995, Bd. 2, 23.April 1995, VERBAND DEUTSCHER ELEKTROTECHNIKER (VDE) ET AL, Seiten 256-260, XP000495663 FRANZ R ET AL: "INTERACTIVE VIDEO - SERVICES, SUCCESS FACTORS AND NETWORK SOLUTIONS"

## Beschreibung

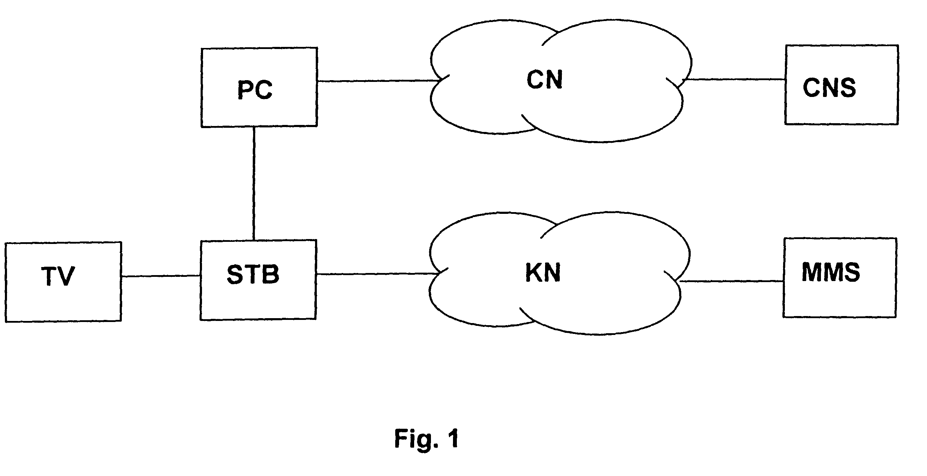

Interaktive Multimedia-Dienste können sowohl mit entsprechend ausgerüsteten Personal Computern als auch mit speziellen Zusatzgeräten (Set-Top-Box, STB) für handelsübliche Fernseher genutzt werden. Der PC verfügt über Eingabegeräte, wie Tastatur und Maus, und eignet sich daher besonders für interaktive Dienste mit Texteingabe und Textanzeige. Für interaktive Videodienste und zur qualitativ hochwertigen Wiedergabe von Multimediadaten in Echtzeit werden wegen der großen Bildschirmfläche vorzugsweise Fernseher mit Zusatzgerät eingesetzt. PC's befinden sich meist im Arbeitszimmer der Wohnung, während der Fernseher üblicherweise im Wohnzimmer zu finden ist. In Zukunft werden viele Haushalte sowohl über einen PC als auch über einen Fernseher mit Zusatzgerät verfügen, die entweder lokal oder über öffentliche Netze verbunden sind (siehe FIG 1).

Interaktive Videodienste, wie z.B. Video-on-Demand und andere Multimedia-Dienste, werden zur Zeit in verschiedenen Pilotversuchen erprobt. Für die Übertragung der Videofilme vom Server bis zum Teilnehmer werden echtzeitfähige Breitband-Kommunikationsnetze, wie das Breitband-ISDN, benötigt, um die für Videodienste geforderte Dienstgüte zu gewährleisten. Als Endgeräte werden vorwiegend Fernseher eingesetzt, die mit einem Zusatzgerät (STB) zur Abwicklung der interaktiven Dienste ausgerüstet sind. Die Auswahl des Diensteanbieters sowie der Videofilme erfolgt üblicherweise mit Hilfe von speziellen Anwendungen (Navigatoren), die vom Netzbetreiber oder Diensteanbieter zur Verfügung gestellt werden.

Der PC wird auch in Privathaushalten zunehmend für Kommunikationsaufgaben (Fax, Internet-Zugang) eingesetzt. Computernetze, wie das Internet, eignen sich zwar nicht für die Übertragung von Videodaten in Echtzeit. Diese Netze bieten jedoch eine Vielzahl von Diensten und Informationen, auf die mit Hilfe von komfortablen Anwendungen, wie z.B. Mosaic oder Netscape im World Wide Web, zugegriffen werden kann. Insbesondere das Internet entwickelt sich immer mehr von einem Forschungsnetz zu einer Plattform für kommerzielle Dienstleistungen aller Art, die über das Netz vertrieben werden. In Zukunft werden auch Anbieter von interaktiven Videodiensten im Internet für ihre Dienste werben.

Ein Benutzer, der sowohl über eine Set-Top-Box als auch über einen PC mit Internet-Zugang verfügt, kann das Internet als Informationsmedium und Navigator für neue Videodienste verwenden. Ein PC eignet sich wesentlich besser für die interaktive Auswahl von Informationen und ermöglicht komfortablere Suchfunktionen als eine Set-Top-Box, die nur über eine einfache Fernbedienung verfügt.

Bei der bisherigen Lösung muß der Benutzer nach der Auswahl eines Films zunächst den PC verlassen, mit Hilfe der Set-Top-Box eine Verbindung über das Breitbandnetz mit dem entsprechenden Diensteanbieter herstellen und erneut dessen Navigator bedienen, um schließlich den gewünschten Film zu erhalten. Die vorliegende Erfindung soll diesen Vorgang automatisieren und damit vereinfachen, indem die Set-Top-Box die mit Hilfe des PCs aus einem Computernetz geladenen Informationen direkt zum Aufbau einer Breitbandverbindung zu einem Multimediaserver verwendet. Diese Aufgabe wird mit Hilfe eines Verfahrens zur Auswahl und zum Abruf von Multimedia-Diensten mit Merkmalen nach Anspruch 1 gelöst. Bei dieser Lösung wird mit Hilfe eines an ein Computernetz angeschlossenen Datenkommunikationsendgerätes von einem Anwender mindestens ein auf einem Multimedia-Server gespeichertes Angebot eines Multimedia-Dienstes ausgewählt. Daraufhin wird als Ergebnis des Auswahlvorganges eine Datei mit Zugangsdaten an das Endgerät des Anwenders übertragen; die Zugangsdaten identifizieren ein ausgewähltes Angebot eindeutig und umfassen die zum Abruf benötigten Informationen. Die darin enthaltenen Daten werden nach Maßgabe des Anwenders entweder sofort an eine Set-Top-Box übertragen oder zunächst vom Endgerät gespeichert, um später an eine Set-Top-Box übertragen werden zu können. Aus den übertragenen Daten wird auf der Set-Top-Box ein Auswahlmenü generiert, mit dessen Hilfe ein Anwender ein Angebot auswählt. Die Set-Top-Box wertet die in der Datei enthaltenen Daten aus und baut eine entsprechende Steuerverbindung zu dem Multimedia-Server auf, mit der das ausgewählte Angebot abgerufen wird.

Die Auswahl von Multimediaangeboten wird also vereinfacht durch die Übertragung eines mit Hilfe eines PCs von einem Computernetz geladenen elektronischen Tickets auf eine Set Top Box. Auf der Set Top Box ermöglicht das Ticket ohne weitere Navigationsmaßnahmen den direkten Aufbau einer Breitbandverbindung zu dem Server, auf dem das Angebot gespeichert ist.

Vorteilhafte Weiterbildungen und bevorzugte Ausführungsformen der Erfindung sind Gegenstand untergeordneter Patentansprüche.

Fig. 1 zeigt in schematischer Weise eine Netzkonfiguration, wie sie der Erfindung typisch zugrundeliegt.

Fig. 2 zeigt in schematischer Weise den Aufbau eines Tickets (Datei mit Zugangsdaten) gemäß der vorliegenden Erfindung.

Fig. 3 zeigt in schematischer Weise den Ablauf des Verfahrens einer bevorzugten Ausführungsform der vorliegenden Erfindung.

Im folgenden wird die Erfindung mit Hilfe bevorzugter Ausführungsbeispiele und anhand der Figuren näher beschrieben.

FIG 1 zeigt eine Netzkonfiguration, wie sie der Erfindung zugrundeliegt. Ein Fernsehgerät TV ist über eine Set-Top-Box STB an ein Breitband-Kommunikationsnetz KN mit einem Multimedia-Server MMS, z.B. einem Video-on-Demand-Server, verbunden. Mit der Set-Top-Box ist ein Personal Computer PC über ein öffentliches Kommunikationsnetz oder über eine lokale Verbindung verbunden, welcher gleichzeitig über ein Computernetz CN mit einem Computer-Netzwerk-Server CNS verbunden ist.

Als Endgeräte sind also sowohl ein PC als auch eine Set-Top-Box und ein Fernseher vorhanden. Der PC ermöglicht den Zugang zu einem Computernetz mit Netzwerkservern, wie z.B. dem Internet. Die Set-Top-Box ist an ein breitbandiges Kommunikationsnetz KN angeschlossen, über das interaktive Videodienste von entsprechenden Servern MMS genutzt werden können. Über die Verbindung zwischen PC und Set-Top-Box (lokal oder über ein öffentliches Netz oder über ein entsprechendes Inhouse-Netz) ist ein Datenaustausch zwischen PC und Set-Top-Box möglich.

Eine Variante der in FIG 1 gezeigten Konfiguration wird in der deutschen Patentanmeldung 19 52 0045.4 (Integration von Computernetzen und Kommunikationsnetzen) beschrieben, bei der ein PC und eine Set-Top-Box beide am selben breitbandigen Kommunikationsnetz angeschlossen sind. In diesem Fall erfolgt der Zugang zum Computernetz über das breitbandige Kommunikationsnetz. Ebenfalls in der genannten Patentanmeldung wird eine weitere Konfiguration beschrieben, bei der der Netzwerk-Server und der Video-Server zu einem Server oder Serververbund zusammengefaßt sind und wobei dieser Server oder Serververbund sowohl am Computernetz als auch am breitbandigen Kommunikationsnetz angeschlossen sind. Für die Beschreibung der vorliegenden Erfindung sind diese Konfigurationen gleichwertig.

Gemäß der vorliegenden Erfindung wird nun bei der Auswahl eines Angebotes auf einem Multimedia-Server mit Hilfe einer Anwendung, die auf einem Datenkommunikationsendgerät läuft, welches über ein Computernetz mit dem Multimedia-Dienst verbunden ist, eine Datei an das Datenkommunikationsendgerät übertragen, die man auch als Ticket bezeichnen kann. Dieses Ticket wird von einem Netzwerk-Server des Computernetzes abgerufen und über den Personal Computer (eventuell nach vorheriger Zwischenspeicherung) auf die Set-Top-Box übertragen. Dieses Ticket ist eine Datei, die in erster Linie Zugangsdaten (AccDat) enthält, also Daten, die ein ausgewähltes Angebot eindeutig identifizieren und sämtliche zum Abruf des ausgewählten Multimedia-Angebotes benötigten Informationen umfassen.

Die Datei mit Zugangsdaten hat typischerweise folgenden Inhalt:
- Eine Angabe über den Betreiber und die Art des Dienstes. Anhand dieser Information überprüft die Set Top Box, ob die Wiedergabemöglichkeiten für die Benutzung des Dienstes ausreichen.
- Eine Information über mit dem Videoserver abzuwickelnde Protokolle. Diese Angabe wird häufig Protokolle für mehrere Verbindungen beschreiben. Eine typische Angabe ist: Steuerverbindung mit DSM-CC über TCP/IP, Videoverbindung im MPEG-2 Program Stream Format.
- Die Netzwerk-Adresse des Breitbandservers. Diese Information kann, abhängig vom Netzbetreiber, verschiedene Formate annehmen. Auf lange Sicht ist hier eine Breitband-ISDN-Adresse zu erwarten.
- Parameter für die einzurichtenden Verbindungen, wie Bitrate, oder (bei B-ISDN) "high and low layer information", evtl. "called party subaddress".
- Eine Folge von Befehlen, die von der Set Top Box an den Videoserver geschickt werden sollen. Diese Kommandos dienen dazu, den üblicherweise vom Benutzer durchgeführten Auswahlprozeß zu simulieren. Unter Umständen existieren spezielle Kurzbefehle zur direkten Adressierung einer bestimmten Information; es kann aber auch nötig sein, hier die Auswahlhierarchien eines Menüsystems zu durchlaufen.

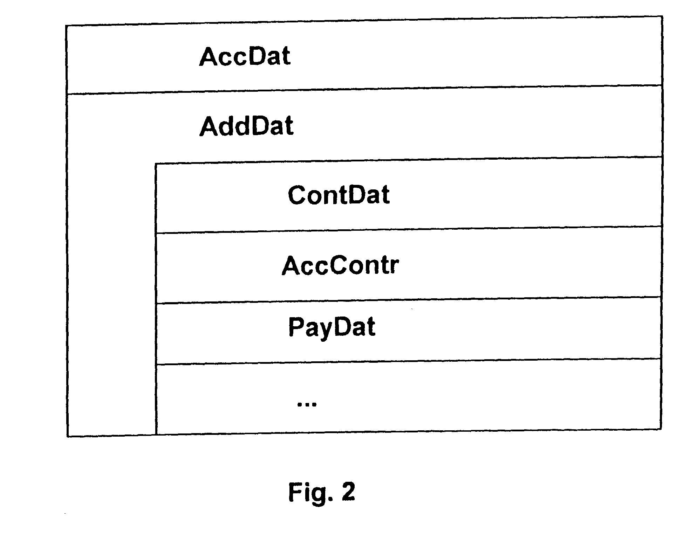

Mit diesen Zugangsdaten ist es möglich, eine entsprechende Steuerverbindung zu dem Multimedia-Server, auf dem das Angebot gespeichert ist, aufzubauen. In FIG 2 ist die Datenstruktur des Tickets, also der beim Auswahlvorgang übertragenen Datei, schematisch dargestellt. Optional kann die Datei auch noch Zusatzdaten (AddDat) umfassen, die inhaltsbezogene Daten sein können (ContDat) oder die mit der Zugangskontrolle (AccContr) zu dem Multimedia-Server oder mit Abrechnungsdaten (PayDat) und ähnlichem zu tun haben können.

Mögliche Zusatzdaten (AddDat) sind:
a) Inhaltsbezogene Daten (ContDat) :
   Der Benutzer kann auf dem PC eine Vielzahl von Tickets ablegen, und ein lokales Auswahlmenü nach seinen Wünschen gestalten. Jedes Ticket sollte daher bestimmte inhaltsbezogene Daten enthalten, wie z.B. den Titel des Films, die Schauspieler, den Regisseur, eine Kurzfassung der Handlung und eventuell einige Bilder oder kurze Videoclips. Die inhaltsbezogenen Daten helfen bei der Auswahl der Tickets und können von einem Navigator angezeigt werden. Um eine entsprechende Darstellung zu ermöglichen, können die inhaltsbezogenen Daten beispielsweise in einem Hypertext-Format abgelegt werden, wie es auch im World-Wide-Web verwendet wird. Inhaltsbezogene Daten sind im Normalfall unverschlüsselt.
b) Zugangskontrolle (AccContr) :
   Der Benutzer kann jedes Ticket mit einem individuellen Paßwort versehen, um eine unbefugte Nutzung zu verhindern.
   Dies ist insbesondere dann notwendig, wenn das Ticket bereits bezahlt ist oder Abrechnungsdaten, wie Kreditkartennummer oder Kontonummer des Benutzers, enthält. Das Paßwort dient gleichzeitig zur Verschlüsselung von allen abrechnungsbezogenen Daten.
c) Abrechnungsdaten (PayDat) :
   Der Benutzer hat die Möglichkeit, sein Ticket sofort bei Ausstellung zu bezahlen oder die zur späteren Abrechnung benötigten Daten dem Ticket beizufügen. Die sofortige Bezahlung kann entweder durch Angabe einer Kreditkartennummer oder über neuartige Zahlungsmittel, wie Electronic Cash, erfolgen. Bei sofortiger Bezahlung wird dem Ticket eine Authorisierungsnummer beigefügt, die zur einmaligen Benutzung des entsprechenden Dienstes berechtigt. Falls die Bezahlung erst bei Inanspruchnahme des Dienstes erfolgen soll, können die Abrechnungsdaten aus einer Kontonummer oder Kreditkartennummer bestehen. Auf diese Weise ist auch eine mehrmalige Nutzung des Tickets möglich. Alle Abrechnungsdaten müssen verschlüsselt werden.

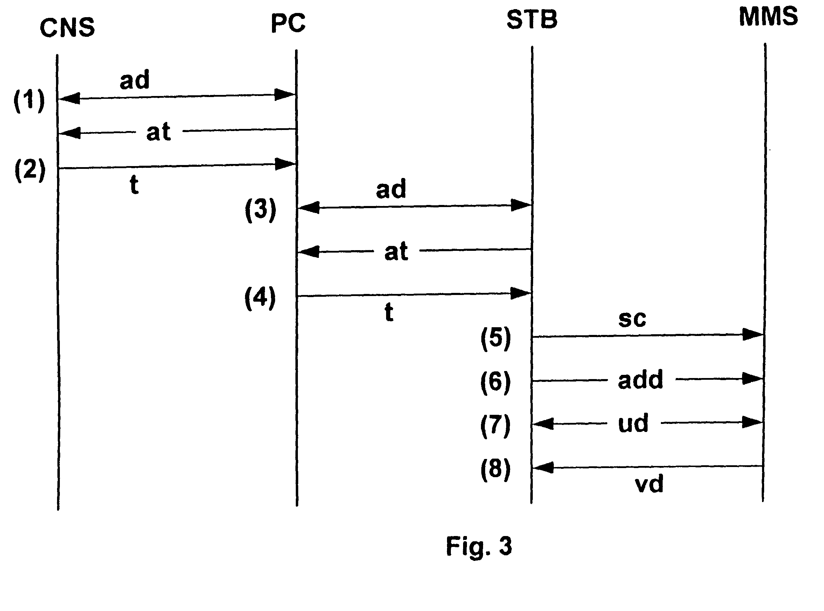

Die Verwendung des Tickets für den Abruf von interaktiven Videodiensten und anderen Multimedia-Angeboten wird beispielhaft anhand des in FIG 3 gezeigten Ablaufs beschrieben:
1. Gemäß der in FIG 1 gezeigten Konfiguration wird für die Auswahl des Video-Dienstes zunächst ein PC verwendet, der an einem Computernetz, z.B. dem Internet, angeschlossen ist. Der Benutzer kommuniziert mit einem ebenfalls am Computernetz angeschlossenen Netzwerk-Server CNS, um einen interaktiven Video-Dienst oder einen Videofilm auszuwählen (ad). Im Internet kann dazu beispielsweise ein Browser für das World-Wide-Web verwendet werden.
2. Im Verlauf des Auswahlvorganges können mehrere Tickets (t) vom Netzwerk-Server über das Computernetz zu dem PC übertragen und dort gespeichert werden (at). Im Internet kann dies beispielsweise mit Hilfe von existierenden Anwendungen, wie FTP oder World-Wide-Web-Browsern, erfolgen.
3. Nachdem die gewünschten Tickets (t) auf dem PC gespeichert sind, kann sich der Benutzer seiner Set-Top-Box zuwenden, um einen interaktiven Video-Dienst zu benutzen. Falls dabei eines der gespeicherten Tickets verwendet werden soll, wird von der Set-Top-Box aus eine Verbindung mit dem PC hergestellt. Falls auf dem PC mehrere Tickets gespeichert sind, wird ein lokaler Navigator zur Auswahl (ad) verwendet. Dieser wertet die inhaltsbezogenen Daten der Tickets (t) aus und erzeugt entsprechende Auswahlmenüs.
4. Nach der Auswahl eines Tickets wird dieses an die Set-Top-Box übertragen (t).
5. Die Set-Top-Box wertet die im Ticket enthaltene Zugangsdatei aus und baut eine Steuerverbindung (sc) zu dem Server für interaktive Video-Dienste auf. Die in der Zugangsdatei enthaltenen Steuerinformationen werden interpretiert, um den entsprechenden Videodienst oder Film automatisch anzuwählen.
6. Die Set-Top-Box übergibt (add) die im Ticket enthaltenen
   Zusatzdaten an den Video-Server zur weiteren Auswertung.
7. Der Video-Server kann einen Dialog (ud) mit dem Benutzer initiieren, um beispielsweise das für dieses Ticket geltende Paßwort abzufragen. Falls das Ticket keine Abrechnungsdaten enthält, müssen diese nun interaktiv eingegeben werden.
8. Nach Abschluß aller Eingaben wird eine breitbandige Verbindung zwischen Video-Server und Set-Top-Box aufgebaut, um Video-Daten (z.B. einen Videofilm) zu übertragen (vd).

Die beschriebene Erfindung hat verschiedene Vorteile gegenüber bisherigen Lösungen. Zum einen ermöglicht die Einführung von elektronischen Tickets, die über Computernetze, wie das Internet, abgerufen werden können, interessierten Benutzern den einfachen und komfortablen Zugang zu den angebotenen Diensten.

Ferner wird durch die Verwendung der Tickets die Übertragung der Auswahlinformationen vom PC auf die Set-Top-Box und weiter auf den Video-Server automatisiert. Dadurch kann ein erneutes Durchlaufen des Navigators auf dem Video-Server vermieden werden.

Die Erfindung hat außerdem den Vorteil, daß jeder Benutzer individuelle Auswahlmenüs auf seinem PC konfigurieren kann. Dazu benötigt der PC einen speziellen Navigator, der die Verwaltung, Darstellung und Auswahl der Tickets unterstützt. Anhand der vorliegenden Beschreibung der Erfindung ist der Fachmann jedoch ohne weiteres in der Lage, solche Navigatoren herzustellen.

Schließlich ermöglicht die Erfindung eine Vorauszahlung bei interaktiven Video-Diensten. Dadurch wird beispielsweise dem Diensteanbieter die Möglichkeit eröffnet, spezielle Preisnachlässe bei sofortiger Bezahlung des Tickets zu gewähren.

## Patentansprüche

1. Verfahren zur Auswahl und zum Abruf von Multimediadiensten, insbesondere im Zusammenhang mit Video on Demand, mit folgenden Schritten:
a) mit Hilfe eines an ein Computernetz angeschlossenen Datenkommunikationsendgerätes wählt ein Anwender mindestens ein auf einem Multimediaserver gespeichertes Angebot eines Multimediadienstes aus;
b) als Ergebnis des Auswahlvorganges wird eine Datei mit Zugangsdaten an das Datenkommunikationsendgerät übertragen; die Zugangsdaten identifizieren ein ausgewähltes Angebot eindeutig und umfassen die zum Abruf benötigten Informationen;
c) die darin enthaltenen Daten werden nach Maßgabe des Anwenders
c1) sofort an eine Set Top Box übertragen oder
c2) zunächst vom Datenkommunikationsendgerät gespeichert um später an die Set Top Box übertragen werden zu können;
d) aus den Daten mindestens einer Datei wird auf der Set Top Box ein Auswahlmenü generiert, mit dessen Hilfe ein Anwender ein Angebot auswählt;
e) die Set Top Box wertet die in der Datei enthaltenen Daten aus und baut entsprechende Verbindungen zu dem Multimediaserver über ein Breitbandnetz auf, mit denen das ausgewählte Angebot abgerufen wird.

2. Verfahren nach Anspruch 1, bei dem die Datei neben den Zugangsdaten noch Zusatzdaten enthält, die eine komfortable Ausgestaltung der Benutzung des Verfahrens ermöglichen.

3. Verfahren nach Anspruch 2, bei dem die Zusatzdaten inhaltsbezogene Daten umfassen.

4. Verfahren nach Anspruch 2, bei dem die Zusatzdaten eine Zugangskontrolle unterstützen.

5. Verfahren nach Anspruch 2, bei dem die Zusatzdaten Abrechnungsdaten enthalten.

6. Verfahren nach einem der vorhergehenden Ansprüche, bei dem die Daten über ein öffentliches Kommunikationsnetz von dem Datenkommunikationsendgerät an die Set Top Box übertragen werden.

7. Verfahren nach einem der vorhergehenden Ansprüche, bei dem die Daten über eine lokale Verbindung von dem Datenkommunikationsendgerät an die Set Top Box übertragen werden.

## Claims

1. Method for selecting and calling up multimedia services, in particular in connection with Video on Demand, having the following steps:
a) with the aid of a data communications terminal connected to a computer network, a user selects at least one offer of a multimedia service, the said offer being stored on a multimedia server,
b) as a result of the selection operation, a file containing access data is transmitted to the data communications terminal; the access data unambiguously identify a selected offer and comprise the information required for the call-up;
c) the data contained therein are, according to the user,
c1) immediately transmitted to a set top box or
c2) firstly stored by the data communications terminal so that they can be transmitted to the set top box later;
d) from the data of at least one file, a selection menu is generated on the set top box and is used by a user to select an offer;
e) the set top box evaluates the data contained in the file and sets up corresponding connections to the multimedia server via a broadband network, the selected offer being called up by means of the said connections.

2. Method according to Claim 1, in which the file contains not only the access data but also additional data enabling a convenient configuration of the use of the method.

3. Method according to Claim 2, in which the additional data comprise content-related data.

4. Method according to Claim 2, in which the additional data support access control.

5. Method according to Claim 2, in which the additional data contain payment data.

6. Method according to one of the preceding claims, in which the data are transmitted via a public communications network from the data communications terminal to the set top box.

7. Method according to one of the preceding claims, in which the data are transmitted via a local connection from the data communications terminal to the set top box.

## Revendications

1. Procédé de sélection et de demande de services multimédia, notamment en rapport avec la vidéo sur demande, comportant les étapes suivantes :
a) à l'aide d'un terminal de communications de données raccordé à un réseau d'ordinateur, un utilisateur sélectionne au moins une offre d'un service multimédia enregistrée sur un serveur multimédia ;
b) il est transmis au terminal de communications de données, comme résultat de l'opération de sélection, un fichier comportant des données d'accès ; les données d'accès identifient une offre sélectionnée de manière non univoque et comprennent les informations nécessaires à la demande ;
c) les données qui y sont contenues sont, suivant la demande de l'utilisateur
c1) immédiatement transmises à une Set-Top-Box ou
c2) d'abord enregistrées par le terminal de communications de données pour pouvoir être transmises ultérieurement à la Set-Top-Box ;
d) il est généré à partir des données d'au moins un fichier, sur la Set-Top-Box, un menu de sélection à l'aide duquel un utilisateur sélectionne une offre ;
e) la Set-Top-Box exploite les données contenues dans le fichier et établit par l'intermédiaire d'un réseau à large bande des liaisons correspondantes au serveur multimédia par lesquelles l'offre sélectionnée est appelée.

2. Procédé suivant la revendication 1, dans lequel le fichier contient outre les données d'accès de plus des données supplémentaires qui permettent de réaliser de manière conviviale l'utilisation du procédé.

3. Procédé suivant la revendication 2, dans lequel les données supplémentaires comprennent des données relatives au contenu.

4. Procédé suivant la revendication 2, dans lequel les données supplémentaires aident un contrôle d'accès.

5. Procédé suivant la revendication 2, dans lequel les données supplémentaires contiennent des données de facturation.

6. Procédé suivant l'une des revendications précédentes, dans lequel les données sont transmises du terminal de communications de données à la Set-Top-Box par l'intermédiaire d'un réseau de communications publiques.

7. Procédé suivant l'une des revendications précédentes, dans lequel les données sont transmises du terminal de communications à la Set-Top-Box par l'intermédiaire d'une liaison locale.
